Europäisches Patentamt

European Patent Office

Office européen des brevets

(11) Publication number: **0 312 985**
**A2**

# EUROPEAN PATENT APPLICATION

(21) Application number: 88117333.0

(22) Date of filing: 18.10.88

(51) Int. Cl.⁴: **H04N 3/26**

(30) Priority: 20.10.87 JP 262675/87
03.01.88 JP 22/88

(43) Date of publication of application:
**26.04.89 Bulletin 89/17**

(84) Designated Contracting States:
**DE FR GB**

(71) Applicant: **VICTOR COMPANY OF JAPAN,
LIMITED
3-12, Moriya-cho
Kanagawa-ku Yokohama(JP)**

(72) Inventor: **Takanashi, Itsuo
3-7-12, Oo-machi Kamakura-shi
Kanagawa-ken(JP)**
Inventor: **Nakagaki, Shintaro
Shonan Raifu Taun Komayori Danchi 14-402,
5450
Ooba Fujisawa-shi Kanagawa-ken(JP)**
Inventor: **Ichimura, Hiroshi
2-1-7-701, Namiki
Kanazawa-ku Yokohama(JP)**
Inventor: **Negishi, Ichiro
2-10-2, Minami Rokugo
Oota-ku Tokyo(JP)**
Inventor: **Osada, Masaru
Shiroyama Guriin Haitsu B102 574-7, Yoshii
Yokosuka-shi Kanagawa-ken(JP)**
Inventor: **Katase, Wataru
Morita-so 1-kai Nishigawa 672, Mutsuura-cho
Kanazawa-ku Yokohama(JP)**
Inventor: **Kitami, Kaoru
Nippon Victor Nobi-ryo B-101 2164,
Nagasawa
Yokosuka-shi Kanagawa-ken(JP)**

(74) Representative: **Dipl.-Phys.Dr. Manitz
Dipl.-Ing.Dipl.-Wirtsch.-Ing. Finsterwald
Dipl.-Phys. Rotermund Dipl.-Chem.Dr. Heijn
B.Sc.(Phys.) Morgan
Robert-Koch-Strasse 1
D-8000 München 22(DE)**

(54) Beam focus control apparatus for image pickup tube.

(57) An electron beam focus in an image pickup tube is varied in response to a focusing signal. An index signal generation pattern is disposed in a light path to a photoelectrical conversion target of the image pickup tube. A level of the focusing signal is increased during at least part of an index pattern scanning period where the electron beam scans a portion of the photoelectrical conversion target which corresponds to the index signal generation pattern. A level of the focusing signal is decreased during at least part of the index pattern scanning period. A level of an output signal from the image pickup tube is detected when the level of the focusing signal is increased. A level of the output signal from the image pickup tube is detected when the level of the focusing signal is decreased. The detected levels are compared. During a period except the index pattern scanning period, the focusing signal is controlled in accordance with a result of the comparison between the detected levels.

FIG. 11

## BEAM FOCUS CONTROL APPARATUS FOR IMAGE PICKUP TUBE

### BACKGROUND OF THE INVENTION

This invention relates to an apparatus for controlling an electron beam focus in an image pickup tube.

Image pickup tubes include a photoelectrical conversion target exposed to an optical image. The photoelectrical conversion target is scanned by an electron beam to convert the optical image into a corresponding electrical video signal. The electron beam is focused on the photoelectrical conversion target by a focusing device such as a focusing electrode. To obtain an acceptable quality of the output video signal from the image pickup tube, the electron beam is generally required to accurately focus on the photoelectrical conversion target. A precise focusing signal applied to the focusing device enables such an accurate beam focus.

In an image pickup tube usable for a high-quality television system, an electron beam is required to very accurately and stably focus on a photoelectrical conversion target.

It is known to control an electron beam focus of an image pickup tube in an open loop manner. Such open loop control tends to inadequately compensate for variations in the beam focus which are caused by temperature variations or ageing of components of the image pickup tube.

### SUMMARY OF THE INVENTION

It is an object of this invention to provide an accurate and stable beam focus control apparatus for an image pickup tube.

A beam focus control apparatus of this invention includes an index signal generation pattern disposed in a light path to a photoelectrical conversion target of an image pickup tube. A level of a focusing signal applied to the image pickup tube is increased during at least part of an index pattern scanning period where the electron beam scans a portion of the photoelectrical conversion target which corresponds to the index signal generation pattern. A level of the focusing signal is decreased during at least part of the index pattern scanning period. A level of an output signal from the image pickup tube is detected when the level of the focusing signal is increased. A level of the output signal from the image pickup tube is detected when the level of the focusing signal is decreased. The detected levels are compared. During a period except the index pattern scanning period, the focusing signal is controlled in accordance with a result of the comparison between the detected levels.

### BRIEF DESCRIPTION OF THE DRAWINGS

Fig. 1 is a block diagram of a beam focus control apparatus according to a first embodiment of this invention.

Fig. 2 is a diagram of a photoelectrical conversion target of an image pickup tube of Fig. 1.

Fig. 3 is a diagram of an index signal generation pattern in the apparatus of Fig. 1.

Fig. 4 is a diagram of another index signal generation pattern in the apparatus of Fig. 1.

Fig. 5 is a diagram of waveforms of signals generated in the apparatus of Fig. 1.

Fig. 6 is a graph showing the relationship between a modulation factor and a focusing electrode voltage in respect of the image pickup tube of Fig. 1.

Fig. 7 is a block diagram of a gate control signal generator in the first embodiment of this invention.

Fig. 8 is a block diagram of the focusing signal generator of Fig. 1.

Fig. 9 is a diagram of waveforms of signals generated in the apparatus of Fig. 1.

Fig. 10 is a diagram of a waveform of a focusing electrode voltage in a modification of the first embodiment.

Fig. 11 is a diagram of a beam focus control apparatus according to a second embodiment of this invention.

Fig. 12 is a diagram of waveforms of signals generated in the apparatus of Fig. 11.

Fig. 13 is a diagram of waveforms of signals generated in the apparatus of Fig. 11.

Fig. 14 is a diagram of waveforms of signals generated in the apparatus of Fig. 11.

Fig. 15 is a diagram of waveforms of signals generated in the apparatus of Fig. 11.

Fig. 16 is a block diagram of the signal generator of Fig. 11.

Fig. 17 is a block diagram of the focusing signal generator of Fig. 11.

Fig. 18 is a block diagram of the pulse generator of Fig. 11.

Fig. 19 is a diagram of waveforms of signals in respect of the pulse generator of Figs. 11 and 18.

Fig. 20 is a diagram of a waveform of a focusing electrode voltage in a modification of the second embodiment.

Fig. 21 is a block diagram of a beam focus control apparatus according to a third embodiment of this invention.

Fig. 22 is a diagram showing time-dependent variations in the focusing electrode voltage in the apparatus of Fig. 21.

Fig. 23 is a block diagram of a beam focus control apparatus according to a fourth embodiment of this invention.

Fig. 24 is a diagram of waveforms of signals generated in the apparatus of Fig. 23.

The same reference characters denote like or corresponding elements throughout the drawings.

## DESCRIPTION OF THE FIRST PREFERRED EMBODIMENT

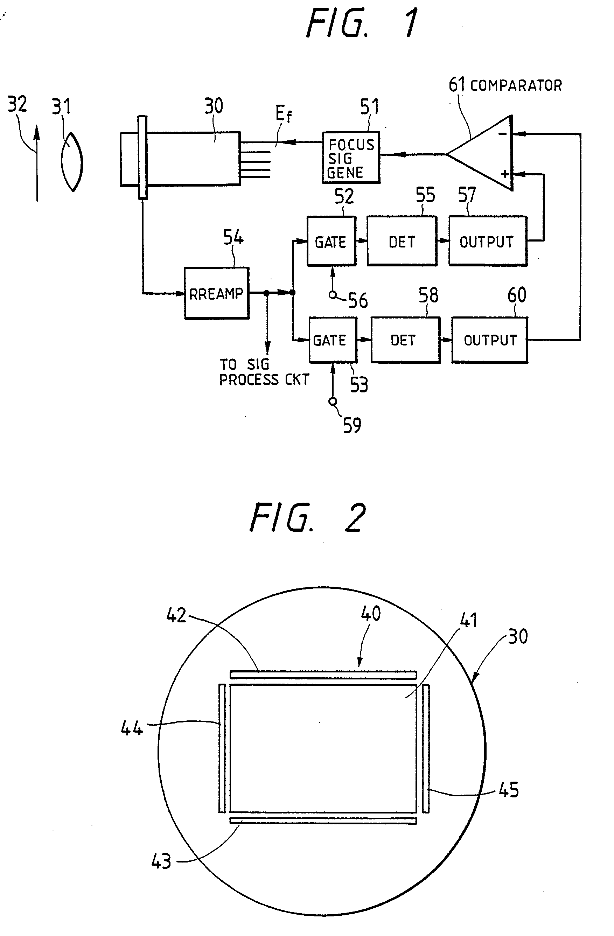

With reference to Figs. 1 and 2, an image pickup tube 30 of the electrostatic focusing type includes a photoelectrical conversion target 40 and a focusing electrode. A lens 31 focuses a scene of an object 32 on the photoelectrical conversion target 40 of the image pickup tube 30. In the image pickup tube 30, the photoelectrical conversion target 40 is scanned by an electron beam so that a video signal corresponding to the scene of the object 32 is generated. A focus of the elecron beam is adjustable with a voltage Ef applied to the focusing electrode. As will be described hereinafter, the focusing electrode voltage Ef is controlled to accurately focus the electron beam on the photoelectrical conversion target 40.

The photoelectrical conversion target 40 has a rectangular effective screen area 41 surrounded by elongated index signal generation areas 42-45. The electron beam scans the index signal generation areas 42-45 in addition to the effective screen area 41. The index signal generation areas 42-45 are exposed to images of respective index signal generation patterns disposed in a light path to the photoelectrical conversion target 40. In one example, the index signal generation patterns are formed directly on the index signal generation areas 42-45 of the photoelectrical conversion target 40. In another example, the index signal generation patterns are formed in a mask disposed in a light path to the photoelectrical conversion target 40.

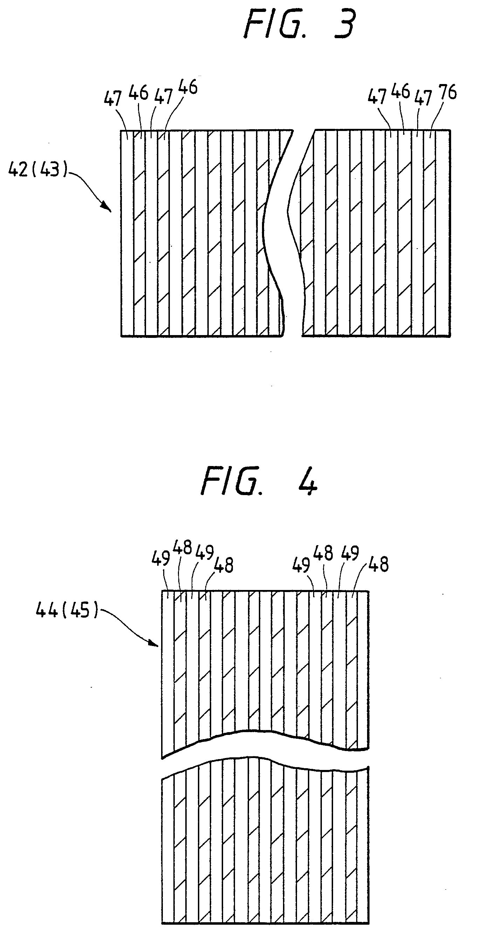

As shown in Fig. 3, the index signal generation areas 42 and 43 which extend along horizontal edges of the effective screen area 41 are exposed to images composed of opaque (black) stripes 46 which leave transparent stripes 47 alternating with each other. The opaque and transparent stripes 46 and 47 extend vertically and thus perpendicular to an electron beam scanning direction.

As shown in Fig. 4, the index signal generation areas 44 and 45 which extend along vertical edges of the effective screen area 41 are exposed to images composed of opaque (black) stripes 48 which leave transparent stripes 49 alternating with each other. The opaque and transparent stripes 48 and 49 extend vertically and thus perpendicular to the electron beam scanning direction.

When the index signal generation areas 42-45 are scanned by the electron beam, index signals corresponding to the respective index signal generation patterns are generated in the output video signal from the image pickup tube 30. The index signals have frequencies corresponding to spatial frequencies of the recurrence of the opaque and transparent stripes in the index signal generation patterns. Accordingly, the frequencies of the index signals are determined by the spatial frequencies of the recurrence of the opaque and transparent stripes in the index signal generation patterns. The frequencies of the index signals are chosen so that the electron beam focus can be appropriately controlled. For example, the frequencies of the index signals are set around the highest frequency of components of the output video signal from the image pickup tube 30 except the index signal components.

As shown in Fig. 1, the focusing electrode voltage Ef is generated by a focusing signal generator 51. The focusing electrode voltage Ef is controlled in accordance with whether the electron beam is scanning preselected at least one of the index signal generation areas 42-45 or other areas of the photoelectrical conversion target 40.

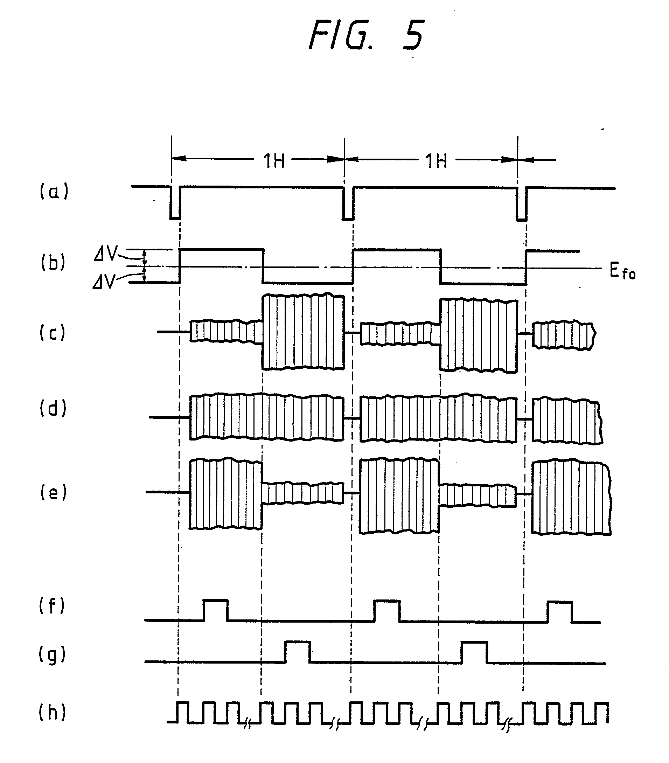

When the electron beam scans the upper index signal generation area 42, as shown in Fig. 5(b), the focusing electrode voltage Ef is positively and periodically modulated to change between a higher level and a lower level in a rectangular waveform having a duty factor of 0.5 by the focus signal generator 51 as explained later. The higher level and the lower level are greater and smaller than a normal level Efo by a predetermined voltage $\Delta V$ respectively. In this case, the focusing electrode voltage Ef has a frequency equal to the frequency of a horizontal sync signal of Fig. 5(a). During a first half of one horizontal scanning period starting from the trailing edge of a horizontal sync pulse, the focusing electrode voltage Ef remains at the higher level. During a second half of one horizontal scanning period, the focusing electrode voltage Ef remains at the lower level. It should be noted that the normal level Efo of the focusing electrode voltage Ef is made effective when the electron beam scans the area of the photoelectrical conversion target 40 except the preselected index signal generation area 42.

The output video signal from the image pickup tube 30 is transmitted to a video signal processing circuit and gates 52 and 53 via a preamplifier 54. When the electron beam scans the preselected index signal generation area and the focusing electrode voltage Ef is increased from the normal level Efo by the predetermined voltage ΔV, the gate 52 passes the video signal to a detector 55 in response to a gate control signal (see Fig. 5(f)) fed via a terminal 56. In other words, the gate 52 extracts an index signal when the focusing electrode voltage Ef is increased by the predetermined voltage ΔV. The detector 55 rectifies the index signal and smooths the rectified signal, finally deriving a signal representative of the amplitude or level of the index signal. A first detection voltage signal representative of the amplitude or level of the index signal is generated by an output circuit 57 on the basis of the output signal from the detector 55. The output circuit 57 is composed of a sample-and-hold circuit or an integration circuit.

When the electron beam scans the preselected index signal generation area and the focusing electrode voltage Ef is decreased from the normal level Efo by the predetermined voltage ΔV, the gate 53 passes the video signal to a detector 58 in response to a gate control signal (see Fig. 5(g)) fed via a terminal 59. In other words, the gate 53 extracts an index signal when the focusing electrode voltage Ef is decreased by the predetermined voltage ΔV. The detector 58 rectifies the index signal and smooths the rectified signal, finally deriving a signal representative of the amplitude or level of the index signal. A second detection voltage signal representative of the amplitude or level of the index signal is generated by an output circuit 60 on the basis of the output signal from the detector 58. The output circuit 60 is composed of a sample-and-hold circuit or an integration circuit.

A comparator 61 receives the first and second detection signals from the output circuits 57 and 60. The comparator 61 outputs a signal which depends on a difference between the first and second detection signals. The output signal from the comparator 61 is applied to the focusing signal generator 51. The focusing signal generator 51 controls the normal level Efo of the focusing electrode voltage Ef in accordance with the output signal from the comparator 61, that is, the differene between the first and second detection signals. It should be noted that the normal level Efo of the focusing electrode voltage Ef is made effective when the electron beam is scanning the area of the photoelectrical conversion target 40 other than the preselected index signal generation area. For example, the normal level Efo of the focusing electrode voltage Ef is increased when the level of the first detection signal is higher than the level of the second detection signal. The normal level Efo of the focusing electrode voltage Ef is decreased when the level of the first detection signal is lower than the level of the second detection signal. The normal level Efo of the focusing electrode voltage Ef is unchanged when the level of the first detection signal is equal to the level of the second detection signal.

In cases where the image pickup tube 30 is exposed to an image of the object 32 via a stripe filter or a color stripe filter, a modulation depth or a modulation factor of the output video signal from the image pickup tube 30 represents the resolution of the image pickup tube 30 or the accuracy of the electron beam focus in the image pickup tube 30. Similarly, in cases where the electron beam scans the index signal generation areas 42-45 of the photoelectrical conversión target 40, the modulation factor of the output video signal from the image pickup tube 30 represents the accuracy of the electron beam focus in the image pickup tube 30. Since the electron beam focus is moved with the focusing electrode voltage Ef, the modulation factor of the output video signal from the image pickup tube 30 depends on the focusing electrode voltage Ef. As the modulation factor increases, the amplitude of the output video signal from the image pickup tube 30 also increases.

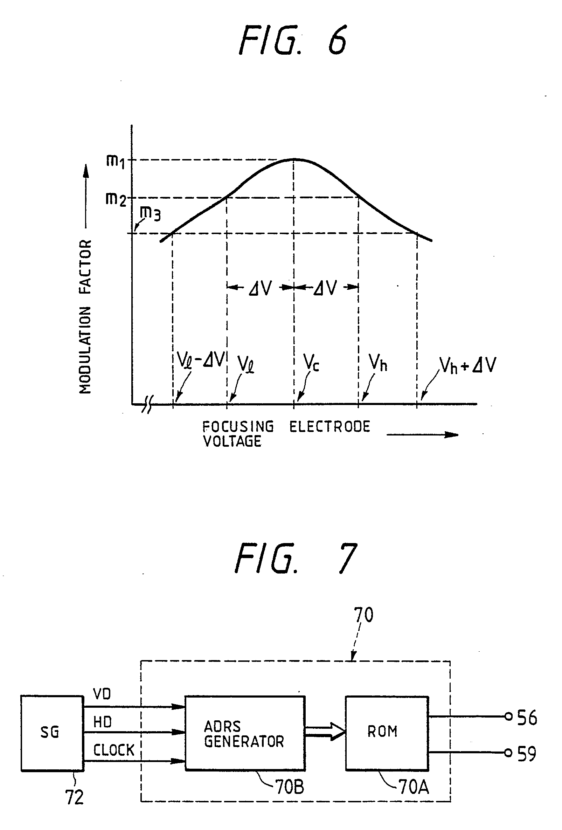

In cases where the electron beam scans the index signal generation area 42, as shown in Fig. 6, the modulation factor of the output video signal from the image pickup tube 30 varies as a function of the focusing electrode voltage Ef. Specifically, the modulation factor increases to a maximal value m1 as the focusing electrode voltage Ef rises to a level Vc. The modulation factor decreases from the maximal value m1 as the focusing electrode voltage Ef rises from the level Vc. In other words, the modulation factor peaks at the focusing electrode voltage Vc. In Fig. 6, the curve which denotes the relationship between the modulation factor and the focusig electrode voltage is symmetrical with respect to the vertical line passing through the focusing electrode voltage Vc. The electron beam focus is generally optimized at the focusing electrode voltage Vc.

In the case where the electrom beam scans the index signal generation area 42 and the focusing electrode voltage Ef is periodically changed above and below the optimal value Vc by the predetermined voltage ΔV, as understood from Fig. 6, the modulation factors of the output video signal from the image pickup tube 30, which occur when the focusing electrode voltage Ef remains at the higher and lower levels, have essentially the same values m2. Accordingly, in this case, as shown in Fig. 5-

(d), the amplitude of the output video signal from the image pickup tube 30 which occurs when the focusing electrode voltage Ef remains at the higher level is essentially equal to the amplitude of the output video signal from the image pickup tube 30 which occurs when the focusing electrode voltage Ef remains at the lower level, so that the first and second detection signals from the output circuits 57 and 60 are essentially equal to each other. Thus, in this case, when the electron beam scans the area of the photoelectrical conversion target 40 other than the index signal generation area 42, the normal level Efo of the focusing electrode voltage Ef is maintained at the level Vc.

It is now assumed that the normal focusing electrode voltage Efo deviates from the value Vc and moves to a value Vh higher than the value Vc. When the electron beam scans the index signal generation area 42, the focusing electrode voltage Ef is periodically changed above and below the value Vh by the predetermined voltage $\Delta V$. In this case, as understood from Fig. 6, the modulation factor of the output video signal from the image pickup tube 30 which occurs when the focusing electrode voltage Ef remains at the higher level is equal to a value m3, while the modulation factor of the output video signal from the image pickup tube 30 which occurs when the focusing electrode voltage Ef remains at the lower level is equal to the value m1. The value m3 is smaller than the value m1. Accordingly, in this case, as shown in Fig. 5-(c), the amplitude of the output video signal from the image pickup tube 30 which occurs when the focusing electrode voltage Ef remains at the higher level is smaller than the amplitude of the output video signal from the image pickup tube 30 which occurs when the focusing electrode voltage Ef remains at the lower level, so that the first detection signal from the output circuit 57 is also smaller than the second detection signal from the output circuit 60. This difference between the first and second detection signals decreases the normal focusing electrode voltage Efo, thereby returning the focusing electrode voltage Efo toward the optimal level Vc.

It is now assumed that the normal focusing electrode voltage Efo deviates from the value Vc and moves to a value V$\ell$ lower than the value Vc. When the electron beam scans the index signal generation area 42, the focusing electrode voltage Ef is periodically changed above and below the value V$\ell$ by the predetermined voltage $\Delta V$. In this case, as understood from Fig. 6, the modulation factor of the output video signal from the image pickup tube 30 which occurs when the focusing electrode voltage Ef remains at the higher level is equal to the value m1, while the modulation factor of the output video signal from the image pickup tube 30 which occurs when the focusing electrode voltage Ef remains at the lower level is equal to the value m3. Accordingly, in this case, as shown in Fig. 5(e), the amplitude of the output video signal from the image pickup tube 30 which occurs when the focusing electrode voltage Ef remains at the higher level is greater than the amplitude of the output video signal from the image pickup tube 30 which occurs when the focusing electrode voltage Ef remains at the lower level, so that the first detection signal from the output circuit 57 is also greater than the second detection signal from the output circuit 60. This difference between the first and second detection signals increases the normal focusing electrode voltage Efo, thereby returning the focusing electrode voltage Efo toward the optimal level Vc.

As shown in Fig. 7, a gate control signal generator 70 outputs the gate control signals (see Figs. 5(f) and 5(g)) to the terminals 56 and 59. The gate control signal generator 70 includes a read only memory (ROM) 70A and an address generator 70B subjected to vertical drive pulses VD, horizontal drive pulses HD, and clocks (see Fig. 5(h)) outputted from a reference signal generator 72. The address generator 70B counts the clocks (see Fig. 5-(h)) and being reset by the pulses VD and HD, finally generating an address signal applied to the ROM 70A. The ROM 70A generates the gate control signals (see Figs. 5(f) and 5(g)) on the basis of the address signal.

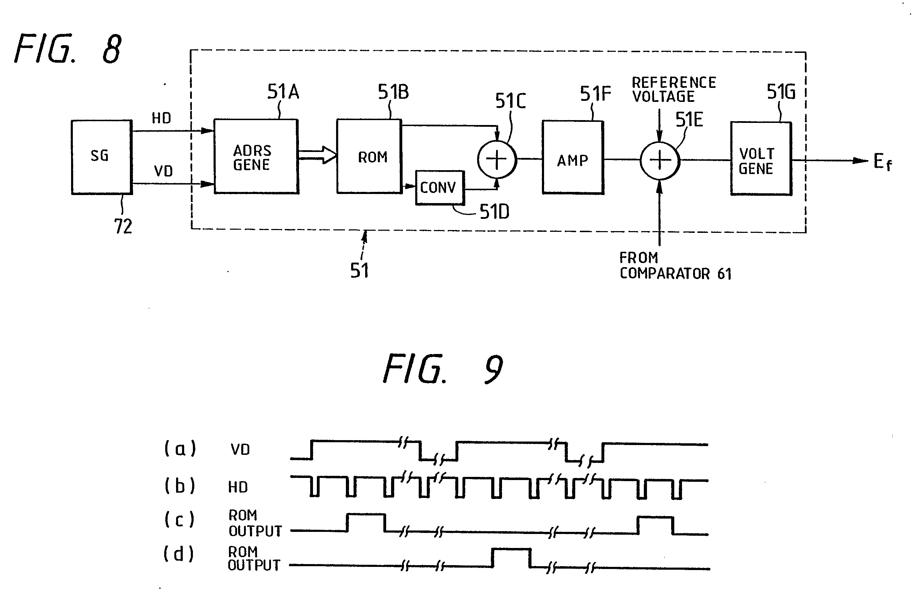

As shown in Fig. 8, the focusing signal generator 51 includes an address generator 51A generating an address signal in accordance with the horizontal drive pulses HD (see Fig. 9(b)) and the vertical drive pulses VD (see Fig. 9(a)) which are outputted from the reference signal generator 72. A read only memory (ROM) 51B generates first and second positive pulse signals (see Figs. 9(c) and 9-(d)) in response to the address signal. The first positive pulse signal is directly applied to an adder 51C. The second pulse signal is transformed into a corresponding negative pulse signal by a sign converter 51D composed of an amplifier having a voltage gain of -1. The negative pulse signal is applied to the adder 51C. The adder 51C sums the positive pulse signal and the negative pulse signal. An output signal from the adder 51C is transmitted to a second adder 51E via an amplifier 51F. The adder 51E receives the output signal from the comparator 61 (see Fig. 1) and a reference signal corresponding to the optimal level Vc of the focusing electrode voltage Ef. In one example, the reference signal is generated by a potentiometer. The adder 51E sums the output signal from the amplifier 51F, the output signal from the comparator 61 (see Fig. 1), and the reference signal. An output signal from the adder 51E is applied to a control terminal of an adjustable voltage generator 51G. The voltage generator 51G outputs the focusing electrode voltage Ef which is generally proportional to the level of the output signal from the adder 51E. Accordingly, the normal level Efo of the focusing electrode voltage Ef is determined by a sum of the reference signal and the output signal from the comparator 61 (see Fig. 1) as there is no output from the amplifier 51F. The focus changing positive-going pulses in the focusing electrode voltage Ef result from the first positive pulse signal which is outputted from the ROM 51B. The focus changing negative-going pulses in the focusing electrode voltage Ef result from the negative pulse signal which is outputted from the sign converter 51D.

As understood from the presvious description, the normal focusing electrode voltage Efo is automatically regulated at the optimal level Vc at which the modulation factor is maximized and thus at which the electron beam focus is optimized. In this way, the electron beam focus is controlled so as to remain optimized. As understood from the previous description, the control of the electron beam focus is of the closed loop type. This closed-loop control of the electron beam focus can compensate for variations in the electron beam focus which would be caused by temperature variations or ageing of components of the image pickup tube 30.

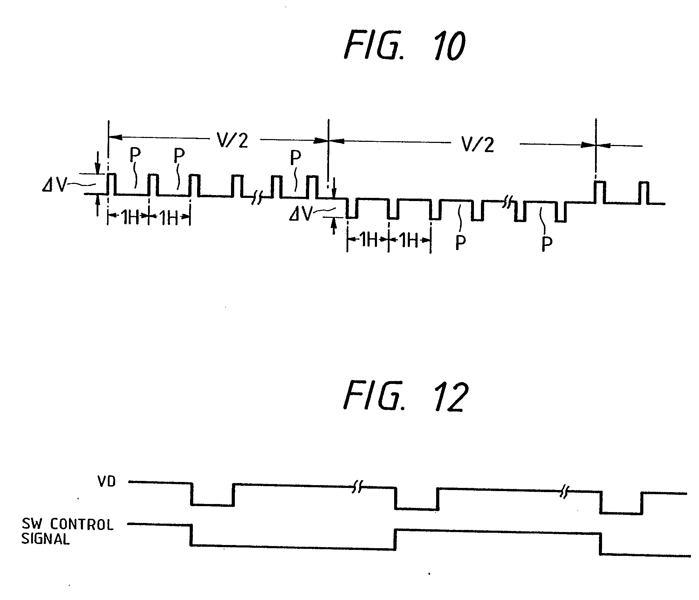

In a modification of the embodiment of Figs. 1-9, one of the side index signal generation areas 44 and 45 is used instead of the upper index signal generation area 42 in controlling the electron beam focus. In this modification, the focusing electrode voltage Ef is changed in a manner of Fig. 10. In Fig. 10, the letter P denotes periods during which the electron beam scans the effective screen area 41 of the photoelectrical conversion target 40.

## DESCRIPTION OF THE SECOND PREFERRED EMBODIMENT

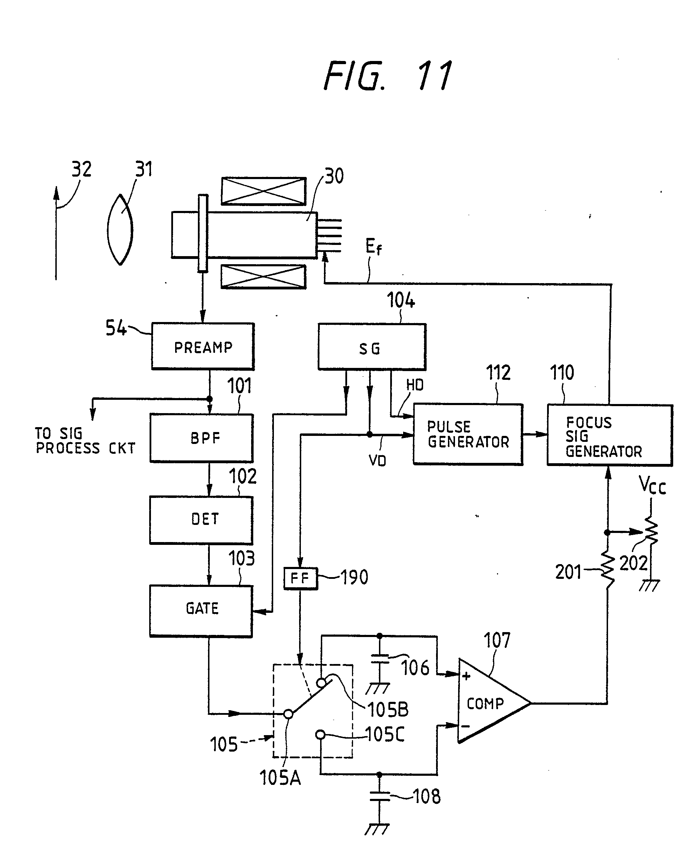

Fig. 11 shows a second embodiment of this invention which is similar to the embodiment of Figs. 1-9 except for design changes indicated hereinafter.

In the embodiment of Fig. 11, an output video signal from an image pickup tube 30 is transmitted to a video signal processing circuit and a band pass filter 101 via a preamplifier 54. The band pass filter 101 selects predetermined-frequency components of the video signal which include index signal components of the video signal. The detector 102 rectifies an output signal from the band pass filter 101 and smooths the rectified signal, finally generating a signal representing the amplitude of the components of the video signal which were selected by the band pass filter 101. An output signal from the detector 102 is applied to a gate 103.

When an electron beam scans an upper index signal generation area 42 (see Fig. 2) of a photoelectrical conversion target in the image pickup tube 30, the gate 103 is opened in response to a gate control signal fed from a signal generator 104. When the electron beam scans other portions of the photoelectrical conversion target, the gate 103 is closed by the gate control signal. Accordingly, an output signal from the gate 103 represents the amplitude of the index signal.

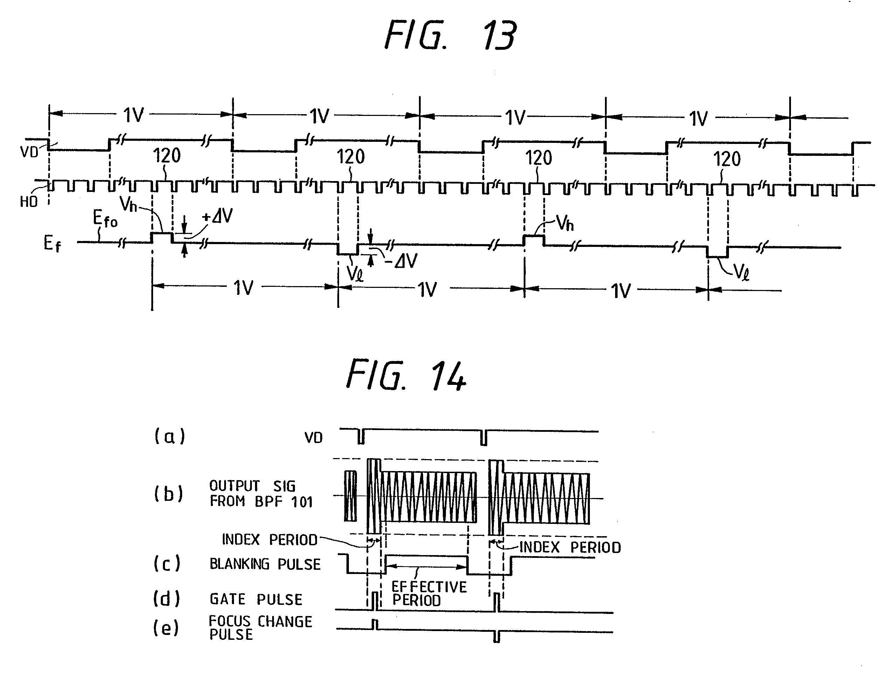

The output signal from the gate 103 is applied to an input terminal 105A of a switch 105. The switch 105 has two output terminals 105B and 105C. The input terminal 105A is electrically connected to either of the two output terminals 105B and 105C in response to a switch control signal fed from a flip-flop 190. The switch control signal is generated on the basis of vertical drive pulses VD outputted from the signal generator 104. As shown in Fig. 12, the switch control signal has a frequency equal to a half of the frequency of the vertical drive pulses VD and has a duty factor of 0.5. When a focusing electrode voltage Ef is increased from a normal level Efo by a predetermined voltage ΔV, the input terminal 105A is connected to the first output terminal 105B in response to the switch control signal so that the output signal from the gate 103 is transmitted to the first output terminal 105B. When the focusing electrode voltage Ef is decreased from its normal level Efo by the predetermined voltage ΔV, the input terminal 105A is connected to the second output terminal 105C in response to the switch control signal so that the output signal from the gate 103 is transmitted to the second output terminal 105C.

A capacitor 106 connected to the first output terminal 105B of the switch 105 serves as a sample-and-hold device or an integrator which acts on the signal transmitted to the switch first output terminal 105B. The capacitor 106 derives a first detection signal representative of the amplitude of the index signal which is generated when the focusing electrode voltage Ef is increased from the normal level Efo by the predetermined voltage ΔV. The first detection signal is applied to a first input terminal of a comparator 107. A capacitor 108 connected to the second output terminal 105C of the switch 105 serves as a sample-and-hold device or an integrator which acts on the signal transmitted to the switch second output terminal 105C. The capacitor 108 derives a second detection signal representative of the amplitude of the index signal which is generated when the focusing electrode voltage Ef is decreased from the normal level Efo by the predetermined voltage ΔV. The second detection signal is applied to a second input terminal of the comparator 107. The comparator 107 outputs a signal which depends on a difference between the first and second detection signals. The output signal from the comparator 107 is applied to a focusing signal generator 110 via a fixed resistor 201. A potentiometer 202 connected to a junction between the fixed resistor 201 and the focusing signal generator 110 generates a reference voltage corresponding to an initial optimal level Vc of the focusing electrode voltage Ef. The resistance of the fixed resistor 201 is chosen so that a sum of the reference voltage and the output signal from the comparator 107 can be applied to the focusing signal generator 110. The sum of the reference voltage and the output signal from the comparator 107 determines a normal level Efo of the focusing electrode voltage Ef.

The device 110 generates the focusing electrode voltage Ef and controls the normal level Efo in accordance with the output signal from the comparator 107. It should be noted that the normal level Efo of the focusing electrode voltage Ef is made effective when the electron beam scans the area of the photoelectrical conversion target except the upper index signal generation area 42 (see Fig. 2). When the voltage of the first detection signal is higher than the voltage of the second detection signal, the signal generator 110 increases the normal level Efo. When the voltage of the first detection signal is lower than the voltage of the second detection signal, the signal generator 110 decreases the normal level Efo. Accordingly, as in the embodiment of Figs. 1-9, the normal focusing electrode voltage Efo is regulated at an optimal value at which the electron beam focus is optimized.

A pulse generator 112 alternately outputs positive pulses and negative pulses to the focusing signal generator 110 at timings determined by a horizontal drive signal (horizontal sync signal) HD and a vertical drive signal (vertical sync signal) VD fed from the signal generator 104. The positive pulses and the negative pulses from the pulse generator 112 have the same amplitudes. The focusing signal generator 110 increases the focusing electrode voltage Ef from its normal level Efo by the predetermined voltage $\Delta V$ in response to each of the positive pulses fed from the pulse generator 112. The focusing signal generator 110 decreases the focusing electrode voltage Ef from its normal level Efo by the predetermined voltage $\Delta V$ in response to each of the negative pulses fed from the pulse generator 112.

As shown in Fig. 13, during predetermined one (shown as 120) of horizontal scanning periods in a vertical scanning period, the focusing electrode voltage Ef is held at a higher level Vh equal to "EFo+$\Delta V$". During predetermined one (120) of horizontal scanning periods in a subsequent vertical scanning period, the focusing electrode voltage Ef is held at a lower level V$\ell$ equal to "Efo-$\Delta V$". These processes are periodically reiterated. Each of the predetermined horizontal scanning periods 120 corresponds to a period during which the electron beam scans the upper index signal generation area 42 (see Fig. 2). As understood from the previous description, the portion of the photoelectrical conversion target which is scanned by the electron beam during the generation of the first detection signal is essentially the same as the portion of the photoelectrical conversion target which is scanned by the electron beam during the generation of the second detection signal. Accordingly, the comparison between the first and second detection signals accurately reflects the deviation of the present electron beam focus from the optimal focus so that the electron beam focus can be accurately maintained at the optimal focus.

As shown in Fig. 14, during each of index periods where the electron beam scans the upper index signal generation area 42 (see Fig. 2), the amplitude of the output signal from the band pass filter 101 ramains at high levels. Each of the index periods is followed by an effective video period determined by a blanking pulse. Gate control pulses applied to the gate 103 are synchronous with vertical drive pulses VD with a predetermined time delay. Each gate control pulse is present within an index period. The focus changing pulses which are outputted from the pulse generator 112 are synchronous with the gate control pulses. The focus changing pulses are composed of alternate positive pulses and negative pulses.

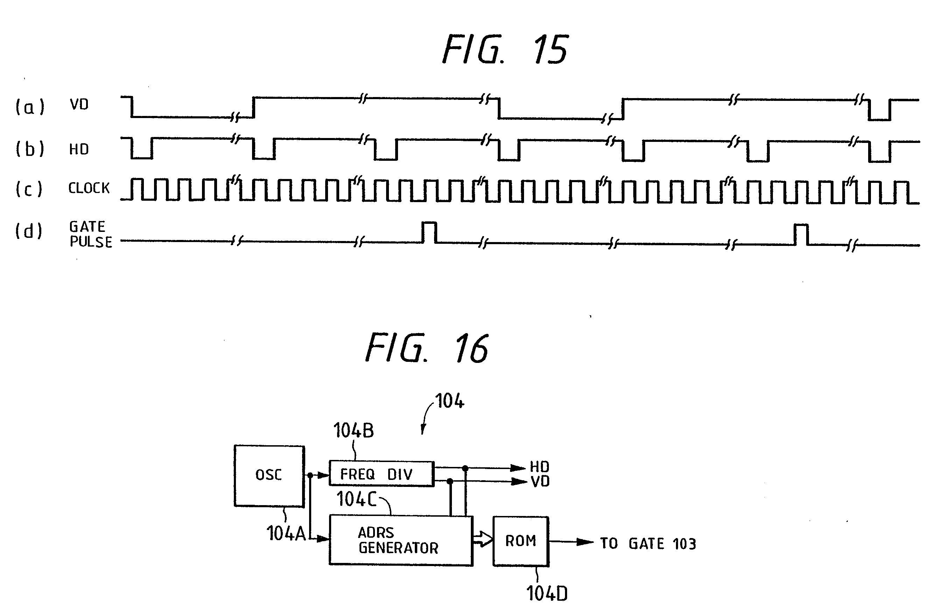

As shown in Fig. 16, the signal generator 104 includes an oscillator 104A outputting constant frequency clocks (see Fig. 15(c)) to a frequency division section 104B and an address generator 104C. The frequency division section 104B is composed of a known combination of frequency dividers and gates, generating the vertical drive pulses VD (see Fig. 15(a)) and the horizontal drive pulses HD (see Fig. 15(b)). The vertical drive pulses VD and the horizontal drive pulses HD are applied to the address generator 104C. The address generator 104C generates an address signal on the basis of the clocks, the vertical drive pulses VD, and the horizontal drive pulses HD. A read only memory (ROM) 104D generates the gate control signal (see Fig. 15(c)) in response to the address signal.

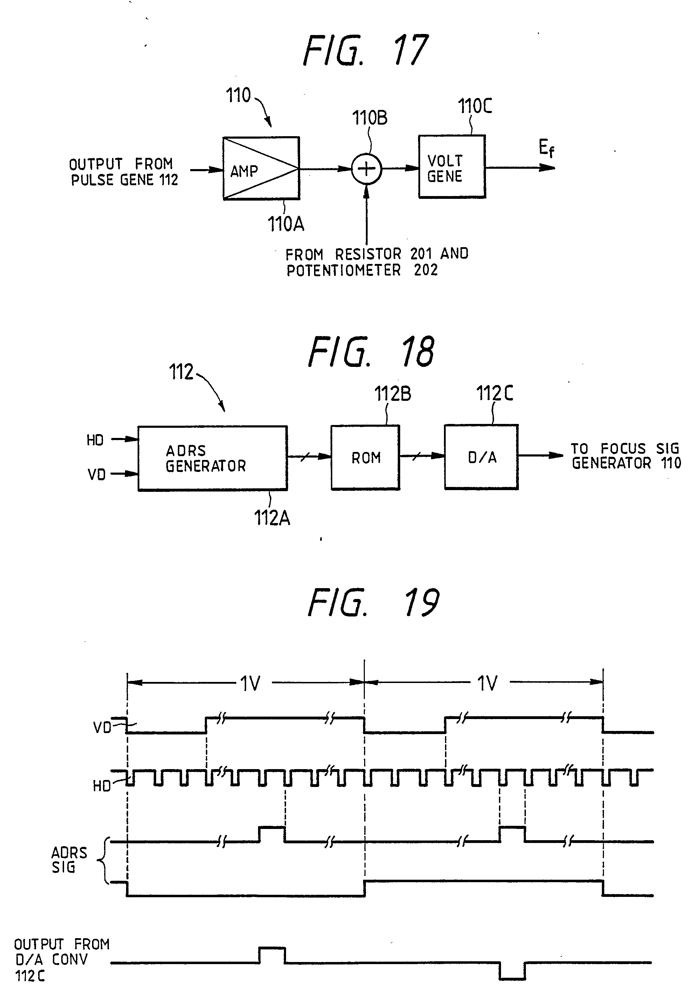

As shown in Fig. 17, the focusing signal generator 110 includes an amplifier 110A, an adder 110B, and an adjustable voltage generator 110C. The focus changing pulse signal from the pulse generator 112 is transmitted to the adder 110B via the amplifier 110A. The focus changing pulse signal and the sum of the output signal from the comparator 107 and the reference voltage from the potentiometer 202 are added by the device 110B. An output signal from the adder 110B is applied to a control terminal of the voltage generator 110C. The voltage generator 110C outputs the focusing electrode voltage Ef which is generally proportional to the sum of the focus changing pulse signal, the output signal from the comparator 107, and the reference signal from the potentiometer 202. Accordingly, the focusing electrode voltage Ef is alternately increased and decreased from its normal level Efo by the predetermined voltage ΔV in response to the focus changing pulses. In addition, the normal level Efo is determined by the sum of the reference voltage and the output signal from the comparator 107.

As shown in Fig. 18, the pulse generator 112 includes an address generator 112A, a read only memory (ROM) 112B, and a digital-to-analog converter 112C. The address generator 112A outputs an address signal to the ROM 112B. As shown in Fig. 19, the address signal is generated on the basis of the vertical drive pulses VD and the horizontal drive pulses HD. The address signal has two bits. The ROM 112B generates a two-bit signal in response to the address signal. The digital-to-analog converter 112C receives the two-bit signal from the ROM 112B and converts the two-bit signal into the focus changing pulse signal (see Fig. 19) which includes alternate positive pulses and negative pulses.

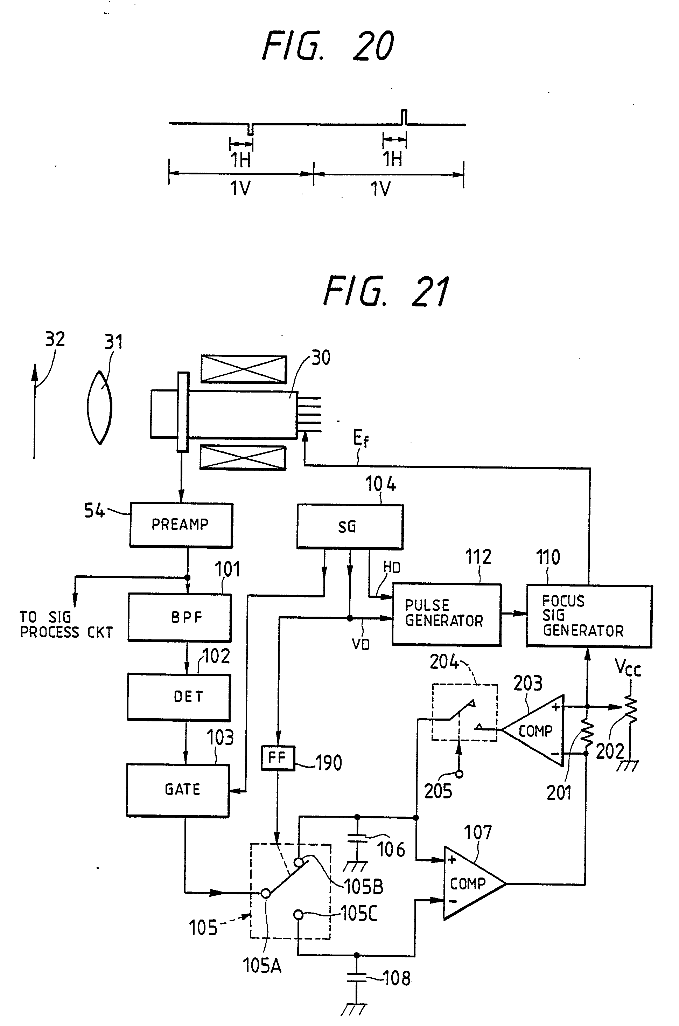

In a modification of the embodiment of Figs. 11-19, one of side index signal generation areas 44 and 45 (see Fig. 2) is used instead of the upper index signal generation 42 (see Fig. 2) in controlling the electron beam focus. In this modification, the focusing electrode voltage Ef is changed in a manner of Fig. 20.

## DESCRIPTION OF THE THIRD PREFERRED EMBODIMENT

Fig. 21 shows a third embodiment of this invention which is similar to the embodiment of Figs. 11-19 except for the following design changes.

The embodiment of Fig. 21 includes a second comparator 203. First and second input terminals of the comparator 203 are connected to opposite ends of a fixed resistor 201 respectively. An output terminal of the comparator 203 is connected to the junction between an input terminal of a comparator 107 and a capacitor 106 via a switch 204. The switch 204 is closed and opened in response to a switch control signal fed via a terminal 205.

The control signal applied to the switch 204 is preferably generated by a timer (not shown) triggered when a power supply switch (not shown) is turned on. This switch control signal may be generated in response to an output signal from a sensor which detects whether or not an electron beam is present in an image pickup tube 30.

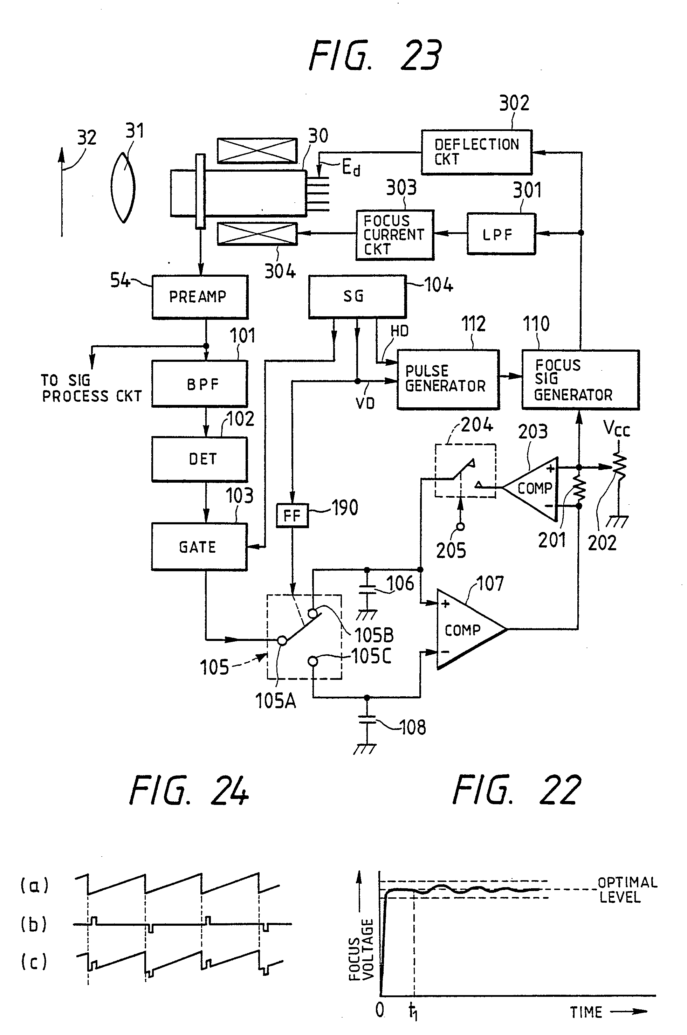

When the power supply switch (not shown) is turned on, the swich 204 connects the output terminal of the comparator 203 to the input terminal of the comparator 107 so that the fixed resistor 201 and the comparators 203 and 107 form a closed loop. The closed loop functions to equalize potentials at the respective opposite ends of the fixed resistor 201. As a result, an output signal from the comparator 107 is made independent of index signal inputs to the comparator 107. Accordingly, a reference voltage determined by a potentiometer 202 and corresponding to an initial optimal electrode focusing voltage Vc is directly applied to a focusing signal generator 110 from a junction between the fixed resistor 201 and the potentiometer 202, so that the focusing signal generator 110 outputs the optimal focusing electrode voltage to an focusing electrode of the image pickup tube 30. As shown in Fig. 22, during a predetermined period t1 which starts when the power supply switch (not shown) is turned on, the focusing signal generator 110 continues to be supplied with the reference voltage so that the focusing electrode voltage remains at the initial optimal level Vc. Accordingly, during the predetermined period t1, the focusing electrode voltage Ef is controlled in an open loop manner. When the predetermined period t1 elapses, the switch 204 disconnects the output terminal of the comparator 203 from the input terminal of the comparator 107 so that the closed loop is disabled. As a result, the output signal from the comparator 107 is allowed to represent a difference between the index signal inputs to the comparator 107. Accordingly, the focusing signal generator 110 starts to control a normal level Efo of the focusing electrode voltage Ef in accordance with the output signal from the comparator 107 in a feedback manner. As understood from the previous description, the electron beam focus is regulated at an optimal level in open loop control during a start of the apparatus and in closed loop control during a period subsequent to the starting period.

## DESCRIPTION OF THE FOURTH PREFERRED EMBODIMENT

Fig. 23 shows a fourth embodiment of this invention which is similar to the embodiment of Figs. 21 and 22 except for the following design changes.

In the embodiment of Fig. 23, an output signal from a focusing signal generator 110 is applied to a low pass filter 301 and a deflection circuit 302. The low pass filter 301 removes pulse components from the output signal of the focusing signal generator 110 which correspond to pulses outputted from a pulse generator 112. A focusing current supply circuit 303 feeds a focusing current to a focusing coil 304 of an image pickup tube 30. The focusing current is generated in accordance with the output signal from the focusing signal generator 110. Accordingly, the focusing current is regulated at an optimal level in open loop control during a start of the apparatus and in closed loop control during a period subsequent to the starting period.

The deflection circuit 302 supplies a deflection electrode voltage Ed to a deflection electrode of the image pickup tube 30. The deflection electrode voltage Ed is generated in accordance with the output signal from the focusing signal generator 110. The deflection electrode voltage Ed takes a waveform of Fig. 24(c) in which pulses of Fig. 24(b) generated on the basis of an output signal from a pulse generator 112 are superimposed over a normal deflection voltage of Fig. 24(a). Accordingly, during periods where en electron beam scans an index signal generation area of a photoelectrical conversion target, the deflection electrode voltage Ed is alternately increased and decreased from normal levels by the superimposed pulses. Since a change in the deflection electrode voltage Ed causes a variation in the electron beam focus, the pulsative increase and decrease in the deflection electrode voltage Ed has an effect similar to that of the pulsative increase and decrease in the focusing electrode voltage Ef in the embodiment of Figs. 11-19. Accordingly, feedback control of the electron beam focus is enabled.

**Claims**

1. A beam focus control apparatus for an image pickup tube in which an electron beam focus is varied in response to a focusing signal, the apparatus comprising:

(a) an index signal generation pattern disposed in a light path to a photoelectrical conversion target of the image pickup tube;

(b) first means for increasing a level of the focusing signal during alternate ones of index pattern scanning periods where the electron beam scans a portion of the photoelectrical conversion target which corresponds to the index signal generation pattern;

(c) second means for decreasing a level of the focusing signal during alternate other ones of the index pattern scanning periods;

(d) third means for detecting a level of an output signal from the image pickup tube when the first means increases the level of the focusing signal;

(e) fourth means for detecting a level of the output signal frcm the image pickup tube when the second means decreases the level of the focusing signal;

(f) fifth means for comparing the levels which are detected by the third and fourth means respectively; and

(g) sixth means for controlling the focusing signal in accordance with a result of the comparison by the fifth means during a period except the index pattern scanning period.

2. The apparatus of claim 1 wherein the focusing signal includes a focusing electrode voltage.

3. The apparatus of claim 1 wherein the focusing signal includes a focusing current.

4. A beam focus control apparatus for an image pickup tube in which an electron beam focus is varied in response to a focusing signal, the apparatus comprising:

(a) an index signal generation pattern disposed in a light path to a photoelectrical conversion target of the image pickup tube;

(b) first means for increasing a level of the focusing signal during at least part of an index pattern scanning period where the electron beam scans a portion of the photoelectrical conversion target which corresponds to the index signal generation pattern;

(c) second means for decreasing a level of the focusing signal during at least part of the index pattern scanning period;

(d) third means for detecting a level of an output signal from the image pickup tube when the first means increases the level of the focusing signal;

(e) fourth means for detecting a level of the output signal from the image pickup tube when the second means decreases the level of the focusing signal;

(f) fifth means for comparing the levels which are detected by the third and fourth means respectively;

(g) sixth means for maintaining the focusing signal at a predetermined level in open loop control during an initial period; and

(h) seventh means for controlling the focusing signal in accordance with a result of the comparison by the fifth means during a period subsequent to the index pattern scanning period and except the index pattern scanning period.

5. The apparatus of claim 4 wherein the focusing signal includes a focusing electrode voltage.

6. The apparatus of claim 4 wherein the focusing signal includes a focusing current.

## FIG. 1

61 COMPARATOR

32  31  30  $E_f$  51

FOCUS SIG GENE

54

RREAMP

GATE 52  DET 55  OUTPUT 57

56

TO SIG PROCESS CKT

GATE 53  DET 58  OUTPUT 60

59

## FIG. 2

42  40  41  30

44

43  45

# FIG. 3

# FIG. 4

EP 0 312 985 A2

# FIG. 5

## FIG. 6

## FIG. 7

# FIG. 8

# FIG. 9

(a) VD

(b) HD

(c) ROM OUTPUT

(d) ROM OUTPUT

EP 0 312 985 A2

# FIG. 10

# FIG. 12

EP 0 312 985 A2

EP 0 312 985 A2

FIG. 11

## FIG. 13

## FIG. 14

(a)  VD

(b)  OUTPUT SIG
     FROM BPF 101

     INDEX PERIOD          INDEX PERIOD

(c)  BLANKING PULSE

     EFFECTIVE
     PERIOD

(d)  GATE PULSE

(e)  FOCUS CHANGE
     PULSE

EP 0 312 985 A2

## FIG. 15

(a) VD

(b) HD

(c) CLOCK

(d) GATE PULSE

## FIG. 16

EP 0 312 985 A2

## FIG. 17

OUTPUT FROM
PULSE GENE 112 →  [AMP] 110A  →  (+) 110B  →  [VOLT GENE] 110C  →  $E_f$

110

FROM RESISTOR 201 AND
POTENTIOMETER 202

## FIG. 18

112

HD →
VD →  [ADRS GENERATOR] 112A  →  [ROM] 112B  →  [D/A] 112C  →  TO FOCUS SIG GENERATOR 110

## FIG. 19

|← 1V →|← 1V →|

VD

HD

ADRS SIG

OUTPUT FROM
D/A CONV
112C

# FIG. 20

# FIG. 21

## FIG. 23

## FIG. 24

## FIG. 22